# EUROPÄISCHE PATENTSCHRIFT

(11) **EP 2 617 286 B1**
(45) Veröffentlichungstag und Bekanntmachung des Hinweises auf die Patenterteilung: **04.07.2018**
(21) Anmeldenummer: 13401004.0
(22) Anmeldetag: 17.01.2013
(51) Int. Cl.: A01M 7/00

(54) **Landwirtschaftliche Feldspritze**
Agricultural field spraying device
Pulvérisateur agricole à cultures

(30) Priorität: 20.01.2012 DE 102012100450
(43) Veröffentlichungstag der Anmeldung: 24.07.2013
(73) Patentinhaber: Amazonen-Werke H. Dreyer GmbH & Co. KG, 49205 Hasbergen (DE)
(72) Erfinder: Ahring, Gunnar, 49082 Osnabrück (DE); Ehlen, Volker, 49205 Hasbergen (DE); Schlüter, Jens, 32351 Stemwede (DE); Voth, Robert, 49163 Bohmte (DE)

(56) Entgegenhaltungen:
- EP-A1- 1 023 831
- EP-A1- 1 629 716
- EP-B1- 0 623 280
- US-A- 5 628 431
- US-A1- 2007 143 933

## Beschreibung

Die Erfindung betrifft eine landwirtschaftliche Feldspritze nach dem Oberbegriff des Anspruchs 1. Eine derartige Feldspritze ist aus der EP 1 023 831 A1 bekannt. Bei dieser Feldspritze wird ein Sensor eingesetzt, der in der Lage ist, die Konzentration des Spritzmittels zu erfassen.

Aus der EP 0 623 280 B1 ist es bekannt, eine Steuerungsvorrichtung vorzusehen, mittels der ein Reinigungsvorgang eingeleitet werden und durchgeführt werden kann. Die Reinigungsqualität, die die Leitung nach der Reinigung aufweist, ist nicht ermittelbar.

Der Erfindung liegt die Aufgabe zu Grunde in einfacher Weise eine Möglichkeit zu schaffen, um die Reinigungsqualität im Flüssigkeitsbehälter und im Spritzmittelkreis überprüfen zu können.

Diese Aufgabe wird bei einer Feldspritze nach dem Oberbegriff des Anspruchs 1 mit den Merkmalen des kennzeichnenden Teils des Anspruchs 1 gelöst.

Infolge dieser Maßnahme kann mittels des Sensors nach dem Spritzvorgang die Reinigungsqualität während des Reinigungsvorganges im Spritzmittelkreislauf und/oder im Spritzmittelbehälter erfasst und dem Anwender angezeigt werden. Durch die Messung und Anzeige der Reinigungsqualität kann der Anwender sich über die Reinigungsqualität vergewissern und nach eigenem Wunsch den Reinigungsvorgang variieren. Somit kann der gewünschte Reinigungsgrad sicher erreicht werden.

Um den Reinigungsvorgang zur Erreichung der gewünschten Reinigungsqualität automatisieren zu können, ist vorgesehen, dass in dem Speicher der Steuer- und/oder Regeleinheit Grenzwerte für die Konzentration des Wirkstoffmittels oder der Wirkstoffmittel in der Spritzflüssigkeit hinterlegt sind, dass entsprechend der Grenzwerte eine Anzeige der Reinigungsqualität in Abhängigkeit der Konzentration des Wirkstoffmittels oder der Wirkstoffmittel in der Spritzflüssigkeit erfolgt.

Ein automatisches beenden und/oder abschalten des Reinigungsvorganges lässt sich dadurch erreichen, dass die Steuer- und/oder Regeleinheit so ausgelegt ist, dass der Reinigungsvorgang bei Erreichen des hinterlegten Wertes für
die Reinigungsqualität, der dem hinterlegten Grenzwert der Konzentration des Wirkstoffmittels oder der Wirkstoffmittel in der Spritzflüssigkeit entspricht, beendet wird.

Eine sehr einfache und leicht verständliche Anzeige über die Reinigungsqualität lässt sich dadurch verwirklichen, dass die Anzeige der Reinigungsqualität in Art einer Ampelanzeige in den Farben Rot, Gelb, Grün erfolgt.

Eine vorteilhafte Ausgestaltung des Flüssigkeitsbehälters um Klarwasser, unter anderem für den Reinigungsvorgang, mit der Feldspritze mitnehmen zu können, lässt sich dadurch verwirklichen, dass in dem Flüssigkeitstank zum Aufteilen des Flüssigkeitstank in zwei voneinander getrennte
Flüssigkeitsaufnahmebereiche eine flexible Zwischenwand angeordnet ist.

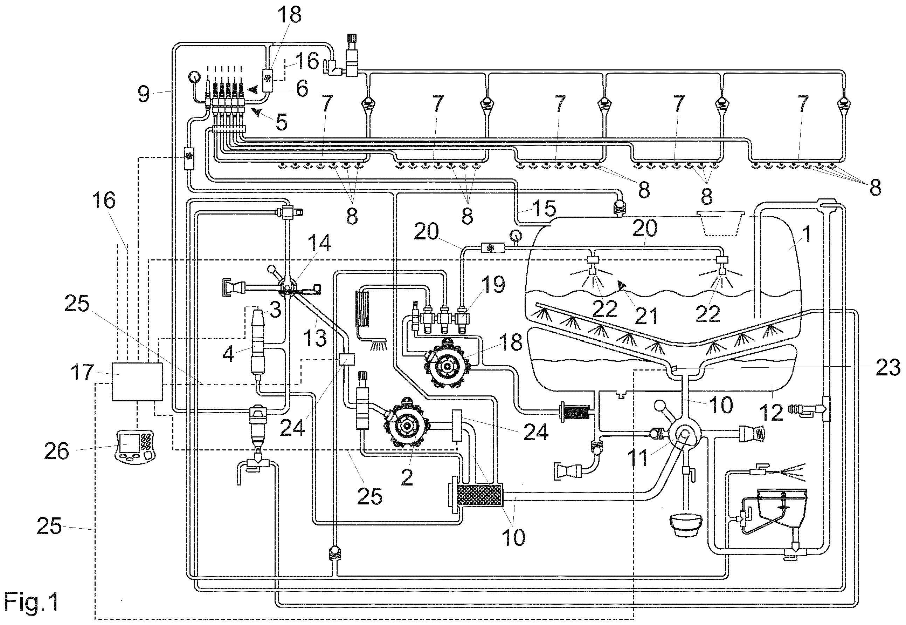

Weitere Einzelheiten der Erfindung sind der Beispielsbeschreibung zu entnehmen. Die Zeichnungen zeigen
- Fig. 1: den Flüssigkeitsplan einer Feldspritze in Prinzipdarstellung
- Fig. 2: einen Teilbereich des Flüssigkeitsplanes gemäß Fig. 1,
- Fig. 3: einen weiteren Flüssigkeitsplan mit einer anderen Ausgestaltung des Klarwasserbehälter in der Darstellung gemäß Fig. 2.

Die Feldspritze weist unter anderem einen Flüssigkeitstank 1 zur Aufnahme der auszubringenden Pflanzenschutzmittelbrühe, eine motorisch angetriebene Pumpe 2, ein über einen Stellmotor 3 einstellbares Regelventil 4 aufweisende Dosierarmatur, die Teilbreitenschaltventile 5 mit den motorischen Einstellgliedern 6, die zu den einzelnen Teilbreitenleitungen 7 mit Spritzdüsen 8 bestückten Verteilergestänge führende Spritzleitung 9 auf.

Auf der Saugseite der Pumpe 2 ist die Saugleitung 10 angeschlossen, die unter Zwischenschaltung eines zentralen Umschaltventils 11 im unteren Bereich des Flüssigkeitstank 1 mündet. An dem Umschaltventil 11 können noch weitere Leitungen zum externen Anschluss von Wassertanks, Vorrichtungen zum Ansaugen von Wasser aus Gewässern, zum Anschluss des Klarwasserbehälters 12 sowie eine Ablaufleitung angeschlossen sein. Auf der Druckseite der Pumpe 2 ist eine Druckleitung 13 angeordnet, die unter Zwischenschaltung eines weiteren Umschaltventils 14 zu dem Regelventil 4 der Dosierarmatur und weiterer Einrichtungen der Feldspritze führt. Die verschiedenen Rücklaufleitungen sind zu einer Sammelrücklaufleitung 15 zusammengefasst. Die Rücklaufleitung 15 mündet in dem Vorratstank 1.

In der von den dem Regelventil 4 zu den Teilbreitenleitungen 7 führenden Spritzleitung 9 ist der über die Signalleitung 16 mit der elektronischen Steuer- und/oder Regeleinrichtung 17 verbundene Durchflussmesser 18 angeordnet.

Unterhalb des Flüssigkeitstanks 1 ist der Klarwasserbehälter 12 zur Aufnahme von Klarwasser angeordnet. Diesem Klarwasserbehälter 12 ist eine zweite Pumpe 18, Regelventile 19 sowie die von den Regelventilen 19 abgehende Reinigungsleitung 20 einer Reinigungseinrichtung 21 für die Innenreinigung des Flüssigkeitstanks 1 auf. An der Reinigungsleitung 20 sind im Flüssigkeitstank 1 mehrere Reinigungsdüsen 22 angeordnet.

Weiterhin wird die durch das vorgeschriebene Einleiten des Klarwassers zur Reinigung des Flüssigkeitstank 1 dazu verwendet, den gesamten Flüssigkeitskreislauf, in dem die Pflanzenschutzmittelbrühe sich befindet, in einem Reinigungsvorgang zu reinigen.

In dem unteren Bereich des Flüssigkeitstanks 1 ist ein Sensor 23 zur Ermittlung der Konzentration des Wirkstoffmittels oder der Wirkstoffmittel in der Spritzflüssigkeit angeordnet. Weiterhin kann anstelle dieses Sensors 23 in dem Flüssigkeitstank 1 der Sensor 24 zur Ermittlung der Konzentration des Wirkstoffmittels oder der Wirkstoffmittel in der Spritzflüssigkeit auch in der Saugleitung 10 oder der Druckleitung 13 angeordnet sein. Es ist auch möglich, den Sensor 23, 24 sowohl in dem Flüssigkeitstank 1 wie auch in den vorbeschriebenen Leitungen 10, 13 anzuordnen.

Die Sensoren 23, 24 sind über Datenleitungen 25 mit der Steuer- und/oder Regeleinrichtung 17 verbunden. Die Sensoren 23, 24 liefern entsprechende Daten über die Konzentration des Wirkstoffmittels oder der Wirkstoffmittel in der Spritzflüssigkeit an die Steuer- und/oder Regeleinrichtung 17 17. Hierdurch ist die Konzentration des Wirkstoffmittels oder der Wirkstoffmittel in der Spritzflüssigkeit zu ermitteln.

Die Steuer- und/oder Regeleinheit 17 weist zumindest einem Speicher auf, in dem zumindest ein Programm mit vorzugsweise verschiedenen Betriebsweisen der Feldspritze hinterlegt ist. In dem Speicher ist zumindest ein Programm abgespeichert, so dass die Steuer- und/oder Regeleinheit 17 in der Lage ist, den Spritzmittelkreis und/oder zumindest einen Spritzmittelbehälter 1 so anzusteuern, dass der Spritzmittelkreis und/oder zumindest ein Spritzmittelbehälter 1 zur Spülung mit Klarwasser in einem Reinigungsvorgang gereinigt werden kann.

Die Steuer- und/oder Regeleinheit 17 weist zumindest eine als Display 26 ausgebildete Anzeigevorrichtung auf, mittels welcher die Konzentration des Wirkstoffmittels oder der Wirkstoffmittel in der Spritzflüssigkeit angezeigt werden kann.

Weiterhin sind in dem Speicher der Steuer- und/oder Regeleinheit 17 Grenzwerte für die Konzentration des Wirkstoffmittels oder der Wirkstoffmittel in der Spritzflüssigkeit hinterlegt. Entsprechend den hinterlegten Grenzwerten erfolgt eine Anzeige der Reinigungsqualität in Abhängigkeit der Konzentration des Wirkstoffmittels oder der Wirkstoffmittel in der Spritzflüssigkeit auf dem Display 26. Diese Anzeige über die Reinigungsqualität erfolgt in bevorzugter Weise in Art einer Ampelanzeige in den Farben Rot, Gelb, Grün.

Es lässt sich auch der Reinigungsvorgang für den Flüssigkeitstank 1 und den Spritzleitungen 7, 9, 10, 13, 20 des Spritzmittelkreises automatisieren. Hierfür ist die Steuer- und/oder Regeleinheit 17 so ausgelegt, dass der Reinigungsvorgang bei Erreichen des hinterlegten Grenzwertes für die Reinigungsqualität, der dem hinterlegten Grenzwert der Konzentration des Wirkstoffmittels oder der Wirkstoffmittel in der Spritzflüssigkeit entspricht, beendet.

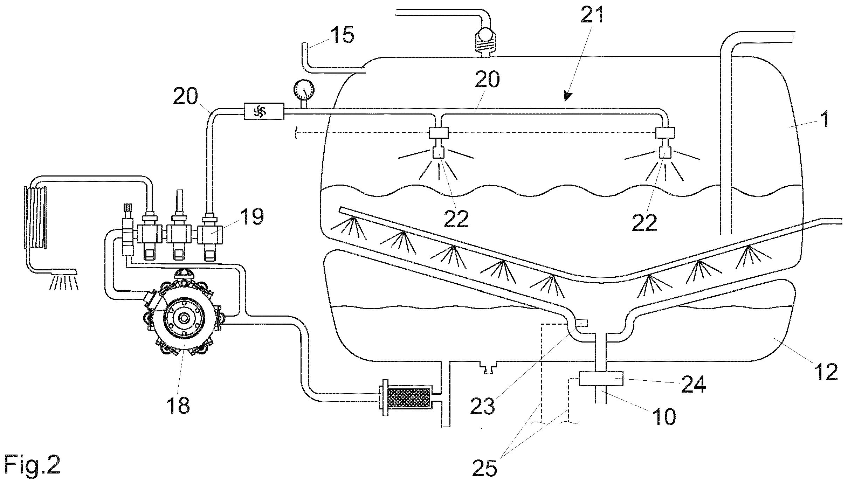

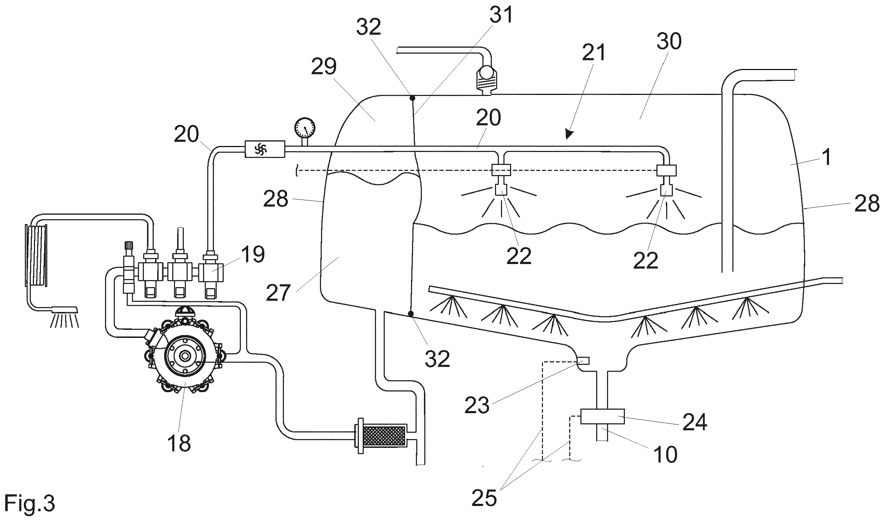

In dem Flüssigkeitsplan gemäß Fig.3, der von seiner Funktion und Aufbau dem Flüssigkeitsplan nach Fig.2 entspricht, ist in schematischer und prinzipieller Weise eine andere Anordnung und Ausgestaltung des Klarwassertanks 27 dargestellt. Der Klarwassertank 27 ist hier nicht zusätzlich unterhalb des Flüssigkeitstanks 1 angeordnet, sondern in integrierter Weise innerhalb der Mantelhülle 28 des Flüssigkeitstanks 1 angeordnet. Zur Trennung des Klarwasserbereiches 29 zur Schaffung des Klarwasserbehälters 27 von dem Spritzmittelbereich 30 ist in dem Flüssigkeitstank 1 zum Aufteilen des Flüssigkeitstanks 1 in zwei voneinander getrennte Flüssigkeitsaufnahmebereiche 29 und 30 die flexible Zwischenwand 31 angeordnet ist. Die flexible Zwischenwand 31 ist mittels Befestigungs- und Dichtmitteln 32 in abgedichteter Weise mit der Mantelhülle 28 des Flüssigkeitstanks 1 verbunden.

## Patentansprüche

1. Landwirtschaftliche Feldspritze mit einer Spritzeinheit, die mindestens einen Spritzflüssigkeits- und/oder Flüssigkeitsbehälter, zumindest eine mit dem Behälter verbundene Pumpe und zumindest einen Spritzmittelkreis besitzt, welcher vorzugsweise als Spritzdüsen ausgebildete Ausbringelemente zur Ausbringung der Wirkstoffmittel aufweisenden Spritzflüssigkeit und diese mit der Pumpe verbindende Leitungen aufweist, einer vorzugsweise als Bordcomputer ausgebildeten elektronischen Steuer- und/oder Regeleinrichtung zum Steuern und/oder Regeln der Betriebsweise der Feldspritze während des Ausbringvorganges, sowie Mitteln zum Steuern und/oder Regeln des Ausbringvorganges, wobei diese Mittel von der Steuer- und/oder Regeleinheit ansteuerbare, motorisch betätigbare Ventile aufweist, wobei die Steuer- und/oder Regeleinheit zumindest einen Speicher, in dem zumindest ein Programm mit vorzugsweise verschiedenen Betriebsweisen der Feldspritze hinterlegt ist, aufweist, wobei in den Leitungen des Spritzmittelkreises und/oder in dem untersten Bereich des Spritzmittelbehälters (1) zumindest ein Sensor zur Ermittlung der Konzentration des Wirkstoffmittels und/oder der Wirkstoffmittel in der Spritzflüssigkeit angeordnet ist, **dadurch gekennzeichnet, dass** in dem Speicher zumindest ein Programm abspeicherbar ist, sodass die Steuer- und/ oder Regeleinheit in der Lage ist den Spritzmittelkreis und/ oder zumindest einen Spritzmittelbehälter so anzusteuern, dass der Spritzmittelkreis und/ oder zumindest ein Spritzmittelbehälter durch Spülung mit Klarwasser in einem Reinigungsvorgang gereinigt wird, wobei mittels des Sensors (23, 24) nach dem Spritzvorgang die Reinigungsqualität während des Reinigungsvorgangs im Spritzmittelkreislauf und/ oder im Spritzmittelbehälter erfasst und dem Anwender angezeigt wird.

2. Landwirtschaftliche Feldspritze nach zumindest einem der vorstehenden Ansprüche, **dadurch gekennzeichnet, dass** in dem Speicher der Steuer- und/oder Regeleinheit (17) Grenzwerte für die Konzentration des Wirkstoffmittels oder der Wirkstoffmittel in der Spritzflüssigkeit hinterlegt sind, dass entsprechend der Grenzwerte eine Anzeige der Reinigungsqualität in Abhängigkeit der Konzentration des Wirkstoffmittels oder der Wirkstoffmittel in der Spritzflüssigkeit erfolgt.

3. Landwirtschaftliche Feldspritze nach zumindest einem der vorstehenden Ansprüche, **dadurch gekennzeichnet, dass** die Steuer- und/oder Regeleinheit (17) so ausgelegt ist, dass der Reinigungsvorgang bei Erreichen des hinterlegten Wertes für die Reinigungsqualität, der dem hinterlegten Grenzwert der Konzentration des Wirkstoffmittels oder der Wirkstoffmittel in der Spritzflüssigkeit entspricht, beendet wird.

4. Landwirtschaftliche Feldspritze nach zumindest einem der vorstehenden Ansprüche, **dadurch gekennzeichnet, dass** die Anzeige der Reinigungsqualität in Art einer Ampelanzeige in den Farben Rot, Gelb, Grün erfolgt.

5. Feldspritze nach zumindest einem der vorstehenden Ansprüche, **dadurch gekennzeichnet, dass** in dem Flüssigkeitstank (1) zum Aufteilen des Flüssigkeitstank (1) in zwei voneinander getrennte Flüssigkeitsaufnahmebereiche (29, 30) eine flexible Zwischenwand (31) angeordnet ist.

6. Landwirtschaftliche Feldspritze mit einer Spritzeinheit, die mindestens einen Spritzflüssigkeits- und/oder Flüssigkeitsbehälter, zumindest eine mit dem Behälter verbundene Pumpe und zumindest einen Spritzmittelkreis besitzt, welcher vorzugsweise als Spritzdüsen ausgebildete Ausbringelemente zur Ausbringung der Wirkstoffmittel aufweisenden Spritzflüssigkeit und diese mit der Pumpe verbindende Leitungen aufweist nach Anspruch 1, **dadurch gekennzeichnet, dass** in dem Flüssigkeitstank (1) zum Aufteilen des Flüssigkeitstank (1) in zwei voneinander getrennte Flüssigkeitsaufnahmebereiche (29, 30) eine flexible Zwischenwand (31) angeordnet ist.

## Claims

1. Agricultural field spraying device with a spraying unit, which has at least one spraying-liquid and/or liquid container, at least one pump connected to the container and at least one spraying-agent circuit, which has delivery elements, preferably formed as spray nozzles, for delivering the spraying liquid comprising active agents and has lines connecting said delivery elements to the pump, an electronic controlling and/or regulating device, preferably formed as an on-board computer, for controlling and/or regulating the operating mode of the field spraying device during the delivery process, and also means for controlling and/or regulating the delivery process, wherein these means comprise motorized valves which can be activated by the controlling and/or regulating unit, wherein the controlling and/or regulating unit has at least one memory, in which at least one program with preferably different operating modes of the field spraying device is stored, wherein at least one sensor for determining the concentration of the active agent and/or the active agents in the spraying liquid is arranged in the lines of the spraying-agent circuit and/or in the lowermost region of the spraying-agent container (1), **characterized in that** at least one program can be stored in the memory, so that the controlling and/or regulating unit is capable of activating the spraying-agent circuit and/or at least one spraying-agent container in such a way that the spraying agent circuit and/or at least one spraying-agent container is cleaned by rinsing with clear water in a cleaning process, wherein, after the spraying process, the cleaning quality is detected by means of the sensor (23, 24) during the cleaning process in the spraying-agent circuit and/or in the spraying-agent container and indicated to the user.

2. Agricultural field spraying device according to at least one of the preceding claims, **characterized in that** limit values for the concentration of the active agent or the active agents in the spraying liquid are stored in the memory of the controlling and/or regulating unit (17) and **in that**, on the basis of the limit values, an indication of the cleaning quality is given in dependence on the concentration of the active agent or the active agents in the spraying liquid.

3. Agricultural field spraying device according to at least one of the preceding claims, **characterized in that** the controlling and/or regulating unit (17) is designed in such a way that the cleaning process is ended on reaching the stored value for the cleaning quality that corresponds to the stored limit value of the concentration of the active agent or the active agents in the spraying liquid.

4. Agricultural field spraying device according to at least one of the preceding claims, **characterized in that** the indication of the cleaning quality takes place in the manner of a traffic light display in the colours red, yellow and green.

5. Field spraying device according to at least one of the preceding claims, **characterized in that** a flexible partition (31) is arranged in the liquid tank (1) for dividing the liquid tank (1) into two liquid receiving regions (29, 30) that are separated from one another.

6. Agricultural field spraying device with a spraying unit, which has at least one spraying-liquid and/or liquid container, at least one pump connected to the container and at least one spraying-agent circuit, which has delivery elements, preferably formed as spray nozzles, for delivering the spraying liquid comprising active agents and has lines connecting said delivery elements to the pump, according to Claim 1, **characterized in that** a flexible partition (31) is arranged in the liquid tank (1) for dividing the liquid tank (1) into two liquid receiving regions (29, 30) that are separated from one another.

## Revendications

1. Pulvérisateur agricole avec une unité de pulvérisation, qui comporte au moins un réservoir de liquide à pulvériser et/ou de liquide, au moins une pompe raccordée au réservoir et au moins un circuit de moyens de pulvérisation, qui présente des éléments d'éjection réalisés de préférence sous forme de buses de pulvérisation pour l'éjection du liquide à pulvériser présentant des agents actifs et des conduites reliant ceux-ci à la pompe, avec un dispositif de commande et/ou de régulation électronique réalisé de préférence sous forme d'ordinateur de bord pour commander et/ou réguler le mode de fonctionnement du pulvérisateur pendant l'opération d'éjection, ainsi qu'avec des moyens pour commander et/ou réguler l'opération d'éjection, dans lequel ces moyens présentent des soupapes actionnables par des moteurs et pouvant être commandées par l'unité de commande et/ou de régulation, dans lequel l'unité de commande et/ou de régulation présente au moins une mémoire, dans laquelle est stocké au moins un programme avec des modes de fonctionnement de préférence différents du pulvérisateur, dans lequel au moins un capteur pour déterminer la concentration de l'agent actif et/ou des agents actifs dans le liquide à pulvériser est disposé dans les conduits du circuit de moyens de pulvérisation et/ou dans la région inférieure du réservoir de milieu à pulvériser, **caractérisé en ce qu'**au moins un programme peut être stocké dans la mémoire, de telle manière que l'unité de commande et/ou de régulation soit en mesure de commander le circuit de moyens de pulvérisation et/ou au moins un réservoir de milieu à pulvériser de telle manière que le circuit de moyens de pulvérisation et/ou au moins un réservoir de milieu à pulvériser soit nettoyé par rinçage à l'eau claire dans une opération de nettoyage, dans lequel la qualité du nettoyage est détectée pendant l'opération de nettoyage dans le circuit de moyens de pulvérisation et/ou dans le réservoir de milieu à pulvériser et est affichée pour l'utilisateur au moyen du capteur (23, 24) après l'opération de pulvérisation.

2. Pulvérisateur agricole selon la revendication précédente, **caractérisé en ce que** des valeurs limites pour la concentration de l'agent actif ou des agents actifs dans le liquide à pulvériser sont stockées dans la mémoire de l'unité de commande et/ou de régulation (17), de telle manière qu'il se produise un affichage de la qualité du nettoyage en fonction de la concentration de l'agent actif ou des agents actifs dans le liquide à pulvériser en correspondance avec les valeurs limites.

3. Pulvérisateur agricole selon au moins une des revendications précédentes, **caractérisé en ce que** l'unité de commande et/ou de régulation (17) est conçue de telle manière que l'opération de nettoyage soit terminée lorsque l'on atteint la valeur stockée pour la qualité du nettoyage, qui correspond à la valeur limite stockée de la concentration de l'agent actif ou des agents actifs dans le liquide à pulvériser.

4. Pulvérisateur agricole selon au moins une des revendications précédentes, **caractérisé en ce que** l'affichage de la qualité du nettoyage est effectuée à la manière des feux de signalisation dans les couleurs rouge, jaune et vert.

5. Pulvérisateur agricole selon au moins une des revendications précédentes, **caractérisé en ce qu'**une paroi intermédiaire flexible (31) est disposée dans le réservoir de liquide (1) pour diviser le réservoir de liquide (1) en deux zones de réception de liquide (29, 30) séparées l'une de l'autre.

6. Pulvérisateur agricole avec une unité de pulvérisation, qui comporte au moins un réservoir de liquide à pulvériser et/ou de liquide, au moins une pompe raccordée au réservoir et au moins un circuit de moyens de pulvérisation, qui présente des éléments d'éjection réalisés de préférence sous forme de buses de pulvérisation pour l'éjection du liquide à pulvériser présentant des agents actifs et des conduites reliant ceux-ci à la pompe selon la revendication 1, **caractérisé en ce qu'**une paroi intermédiaire flexible (31) est disposée dans le réservoir de liquide (1) pour diviser le réservoir de liquide (1) en deux zones de réception de liquide (29, 30) séparées l'une de l'autre.
